(19) Europäisches Patentamt
European Patent Office
Office européen des brevets

(11) **EP 4 200 350 B1**

(12) **EUROPÄISCHE PATENTSCHRIFT**

(45) Veröffentlichungstag und Bekanntmachung des Hinweises auf die Patenterteilung:
**21.05.2025 Patentblatt 2025/21**

(21) Anmeldenummer: **21759295.5**

(22) Anmeldetag: **13.08.2021**

(51) Internationale Patentklassifikation (IPC):
*C08G 18/42* (2006.01)  *C08G 18/48* (2006.01)
*C08G 18/50* (2006.01)  *C08G 18/40* (2006.01)
*C08G 18/76* (2006.01)  *C08G 18/36* (2006.01)
*B32B 15/04* (2006.01)  *B32B 5/02* (2006.01)
*B32B 5/24* (2006.01)  *B32B 15/12* (2006.01)
*B32B 15/18* (2006.01)  *B32B 15/20* (2006.01)
*B32B 21/02* (2006.01)  *B32B 29/00* (2006.01)
*B32B 21/04* (2006.01)  *B32B 27/06* (2006.01)

(52) Gemeinsame Patentklassifikation (CPC):
**C08G 18/4216; B32B 5/022; B32B 5/245; B32B 15/046; B32B 15/12; B32B 15/18; B32B 15/20; B32B 21/02; B32B 21/047; B32B 27/065; B32B 29/007; C08G 18/36; C08G 18/4018; C08G 18/4202; C08G 18/4211;**
(Forts.)

(86) Internationale Anmeldenummer:
**PCT/EP2021/072587**

(87) Internationale Veröffentlichungsnummer:
**WO 2022/038056 (24.02.2022 Gazette 2022/08)**

(54) **POLYOLFORMULIERUNGEN UND EIN VERFAHREN ZUR HERSTELLUNG VON PUR-/ PIR-SCHAUMSTOFFEN AUF BASIS DIESER POLYOLFORMULIERUNGEN**

POLYOL FORMULATIONS AND A METHOD FOR THE PREPARATION OF PUR/PIR FOAMS BASED ON THESE POLYOL FORMULATIONS

FORMULATIONS DE POLYOL ET PROCÉDÉ DE FABRICATION DE MOUSSE PUR/PIR BASÉE SUR LESDITES FORMULATIONS DE POLYOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.08.2020 EP 20191871**

(43) Veröffentlichungstag der Anmeldung:
**28.06.2023 Patentblatt 2023/26**

(73) Patentinhaber: **Covestro Deutschland AG 51373 Leverkusen (DE)**

(72) Erfinder:
• **WELSCH, Nicole**
  **51503 Rösrath (DE)**
• **OFORI, Philip**
  **45131 Essen (DE)**
• **ABELS, Rene**
  **51061 Köln (DE)**
• **DIPPE, Sabine**
  **51371 Leverkusen (DE)**
• **SOBIK, Heinrich-Peter**
  **51375 Leverkusen (DE)**
• **LOEVENICH, Catherine**
  **51469 Bergisch Gladbach (DE)**

(74) Vertreter: **Levpat c/o Covestro AG Gebäude K12 51365 Leverkusen (DE)**

(56) Entgegenhaltungen:
**EP-A1- 3 553 106     WO-A1-2013/010988
WO-A1-2018/206624**

(52) Gemeinsame Patentklassifikation (CPC): (Forts.)
**C08G 18/4225; C08G 18/485; C08G 18/5021;
C08G 18/7664; C08G 18/7671;** B32B 2250/02;
B32B 2250/03; B32B 2250/40; B32B 2262/10;
B32B 2266/0278; B32B 2307/304; B32B 2419/00;
C08G 2110/0025; C08G 2330/00

## Beschreibung

Die vorliegende Erfindung betrifft Polyolformulierungen aus einer Polyesterpolyolkomponente und einer spezifischen Polyetherpolyolkomponente. Die vorliegende Erfindung betrifft ebenfalls ein Verfahren zur Herstellung von Polyurethan-Hartschaumstoffen bzw. Polyurethan-/Polyisocyanurat-Hartschaumstoffen (im Folgenden einzeln oder gemeinsam auch als "PUR-/PIR-Hartschaumstoffe" bezeichnet) unter Verwendung dieser Polyolformulierung und die hiermit hergestellten PUR-/PIR-Hartschaumstoffe.

Wie andere Polymere auch, werden PUR-/PIR-Hartschaumstoffe in der Kälte spröde und neigen dazu, zu reißen und bereits bei geringer Belastung zu brechen. Bei der mechanischen Belastung mit einem Messer in der Kälte beispielsweise zeigen Metallverbundelemente, welche einen PUR-/PIR-Hartschaumstoffkern enthalten, Schadensbilder in Form von Längsrissen. Dies tritt insbesonders bei Polyolformulierungen enthaltend überwiegend aromatische Polyole auf und ist besonders ausgeprägt in den ersten Wochen nach der Herstellung.

Aufgabe der hier geschilderten Erfindung ist es, die Rissanfälligkeit in der Kälte von solchen Metallverbundelementen nach der Herstellung zu reduzieren, insbesondere im Zeitraum der ersten vier Wochen nach der Herstellung.

Diese Aufgabe konnte überraschenderweise durch die Verwendung einer isocyanat-reaktiven Komponente A gelöst werden, welche, bezogen auf das Gesamtgewicht von A, folgende Komponenten enthält:

**A1)** eine Polyolformulierung, umfassend

50-80 Gew.-% (besonders bevorzugt 60-79 Gew.-%) einer Polyolkomponente a1) bestehend aus einem oder mehreren Polyolen ausgewählt aus Polyesterpolyolen, Polycarbonatpolyolen oder Polyetheresterpolyolen mit einer Hydroxylzahl von 100 bis 300 mg KOH/g und einer mittleren Funktionalität von 1,5 bis 2,5, wobei die Polyolkomponente a1) mindestens ein aromatisches oder aromatisch/aliphatisches Polyesterpolyol oder Polyetheresterpolyol umfasst,

0 - 5 Gew.-% (insbesondere 0 - 3 Gew.-%) einer Polyolkomponente a2) bestehend aus einem oder mehreren Polyolen ausgewählt aus Polyesterpolyolen und Polyetheresterpolyolen mit einer Hydroxylzahl von 320 bis 450 mg KOH/g und einer mittleren Funktionalität von 3 bis 4,5, wobei die Polyolkomponente a2) mindestens ein aromatisches oder ein aromatisch/aliphatisches Polyesterpolyol oder Polyetheresterpolyol umfasst,

8,0 - 12,0 Gew.-% einer Polyolkomponente **a3)** bestehend aus einem oder mehreren Polyolen ausgewählt aus Polyetherpolyolen mit einer OH-Zahl von 10 bis 80 KOH/g und einer mittleren Funktionalität von $\geq 2,0$ bis $\leq 3,0$, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO,

0,0 - 7,5 Gew.-% (insbesondere bevorzugt 0 - 5 Gew.-%) einer Polyolkomponente **a4)** bestehend aus einem oder mehreren Polyolen ausgewählt aus Polyetherpolyolen mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid,

0,0 - 3,0 Gew.-% (insbesondere bevorzugt 0,3 - 1,0 Gew.-%) einer Polyolkomponente **a5)** bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;

**A2)** 0 - 5 Gew.-% (insbesondere bevorzugt 0 - 3 Gew.-%) niedermolekulare isocyanat - reaktive Verbindungen, sowie
**A3)** gegebenenfalls Katalysatoren,
**A4)** gegebenenfalls Hilfs- und Zusatzstoffe
**A5)** 0 - 1,5 Gew.-% Wasser und
**A6)** 0 - 7,5 Gew.-% (insbesondere bevorzugt 0 - 5 Gew.-%) Rizinusöl,

enthalten.

Alle angegebenen Gewichtsprozente beziehen sich auf das Gesamtgewicht von **A.**

Polyolformulierungen allgemein enthaltend langkettige Polyetherpolyole, zu denen auch die Verbindungen a3) gehören, sind bekannt. So beschreibt z.B. die WO 2018/206624 A den Einsatz von maximal 20 Gew.-%, bezogen auf die gesamte Reaktionsmischung, an langkettigen Polyethern in Kombination mit kurzkettigen Polyetherpolyolen für die Verbesserung von Haftungseigenschaften. Bezogen auf die Polyolformulierung werden in den Beispielen ca. 6 Gew.-% eines Polyetherpolyols (Polykondensat einer unspezifizierten PO/EO - Mischung, Glyzerin als Starter) mit der OH-Zahl 56 und einem zahlenmittleren Molgewicht von 3000 g/mol eingesetzt.

WO 2013/080988 A1 offenbart ein System zur Herstellung von Sprühschäumen mit höheren Rohdichten als sie für Metallverbundelemente üblich sind, als Treibmittel enthaltend Wassermengen > 1,5 Gew.-% bezogen auf die isocyanat-reaktive Komponente.

WO 2018/206624 A1 offenbart ein Verfahren zur Herstellung von Polyurethan/Polyisocyanurat (PUR/PIR)-Hartschaumstoffen und deren Verwendung in Verbundelementen, welche ein verbessertes Brandverhalten zeigen.

WO 2013/010988 A1 offenbart die Herstellung von wassergetriebenen Polyurethan/Polyisocyanurat (PUR/-PIR)-Hartschaumstoffen mit verbesserter Versprühbarkeit.

Überraschenderweise wurde gefunden, dass die Rissanfälligkeit in der Kälte, z.B. bei -10° und -20°C von Metallverbundelementen mit einem Kern aus PUR-/PIR-Schaumstoffen mit der erfindungsgemäßen Polyolformulierung deutlich reduziert werden. Dahingegen zeigen Metallverbundelemente, die mit einem PIR-System hergestellt worden sind, die keine Komponente a3) bzw. eine zu geringe Menge an Komponente a3) enthalten, Schadensbilder in Form von Längsrissen bei der mechanischen Belastung mit einem Messer, wenn diese in der Kälte beansprucht werden. Dies ist besonders ausgeprägt in den ersten Wochen nach der Herstellung. Gleichzeitig weisen die PUR-/PIR-Schaumstoffe gute mechanische Eigenschaften, wie Zugfestigkeit, Bruchdehnung, Zähigkeit und Offenzelligkeit der PUR-/PIR-Schaumstoffe auf.

Die Polyesterpolyole, die für die Komponente a1) verwendet werden, sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Unter "aromatischen Polyestern" versteht man dabei solche Polyester, zu deren Herstellung nur Polycarbonsäuren eingesetzt werden, welche einen aromatischen Anteil aufweisen. Unter "aromatisch/aliphatischen Polyestern" werden solche Polyester verstanden, zu deren Herstellung aromatische und aliphatische Polycarbonsäuren eingesetzt werden. Dies gilt analog auch für die unten beschriebenen Polyetheresterpolyole. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,3-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Als aromatische Polycarbonsäuren können beispielsweise Phthalsäure, Isophthalsäure, Terephthalsäure, Trimellithsäure, Trimesinsäure (1,3,5-Benzoltricarbonsäure), Pyromellithsäure und Endomethylen-tetrahydrophthalsäure, Tetrahydrophthalsäure, Hexahydrophthalsäure und/oder Tetrachlorphthalsäure eingesetzt werden, insbesondere Phthalsäure und ihre Isomere und Derivate.

Beispiele für aliphatische Polycarbonsäure eignen sich beispielsweise Cyclohexandicarbonsäure, Adipinsäure, Azelainsäure, Sebacinsäure, Glutarsäure, Maleinsäure, Fumarsäure, Itaconsäure, Malonsäure, Korksäure, Bernsteinsäure, 2-Methylbernsteinsäure, 3,3- Diethylglutarsäure, 2,2-Dimethylbernsteinsäure, Dodekandisäure, Dimerfettsäure, Trimerfettsäure und/oder Zitronensäure.

Den eingesetzten Polycarbonsäuren können auch Monocarbonsäuren und deren Derivate zugesetzt werden. Es kommen insbesondere auch biobasierte Ausgangsstoffe und/oder deren Derivate in Frage, wie z. B. Rizinusöl, Polyhydroxyfettsäuren, Ricinolsäure, Stearinsäure, Sojaölfettsäure, Hydroxymodifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxymodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidon-säure, Timnodonsäure, Clupanodonsäure und Cervonsäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Als Polyole in der Komponente a1) können auch Polycarbonatpolyole eingesetzt werden. Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen oder aus Kohlendioxid erhältlich.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art. Statt oder zusätzlich zu reinen Polycarbonatdiolen können auch Polyether-Polycarbonatdiole eingesetzt werden.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit > 4 bis < 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Als Derivate dieser Säuren können beispielsweise deren Anhydride sowie deren Ester und Halbester mit niedermolekularen, monofunktionellen Alkoholen mit > 1 bis < 4 Kohlenstoffatomen eingesetzt werden.

Die Polyole der Komponente a1) weisen mittlere Funktionalitäten von $\geq$1,2 bis $\leq$ 2,9 insbesondere $\geq$1,5 bis $\leq$2,5, und eine Hydroxylzahl zwischen 100 bis 300 mg KOH/g auf, besonders bevorzugt 150 bis 270 mg KOH/g und insbesondere bevorzugt von 160 - 260 mg KOH/g. Vorzugsweise besitzen die Polyole mehr als 70 mol%, bevorzugt mehr als 80 mol%, insbesondere mehr als 90 mol%, primäre OH-Gruppen.

Die Komponente a1) umfasst mindestens ein aromatisches oder aromatisch/aliphatisches Polyesterpolyol oder Polyetheresterpolyol. Dies bedeutet, dass die Komponente a1) einen aromatischen Anteil aufweist. In einer bevorzugten Ausführungsform sind mehr als 50 Gew.-% der Komponente a1) aromatische oder aromatisch/aliphatische Polyesterpolyole und/oder Polyetheresterpolyole, insbesondere mehr als 80 Gew.-%, und ganz besonders bevorzugt besteht die Komponente a1) aus aromatischen und/oder aromatisch/aliphatische Polyesterpolyolen und/oder Polyetheresterpolyolen.

Die Polyole der Komponente a2) werden nach den gleichen, bekannten Verfahren, wie die Polyesterpolyole bzw. Polyetheresterpolyole der Polyolkomponente a1) hergestellt. Die Polyole der Komponente a2) weisen mittlere Funktionalitäten von $\geq$3,0 bis $\leq$6,0, insbesondere $\geq$3,0 bis $\leq$4,5, und eine Hydroxylzahl von 310 bis 500 mg KOH/g auf, besonders bevorzugt 320 bis 450 mg KOH/g. Vorzugsweise besitzen die Polyesterpolyole a2) mehr als 70 mol%, bevorzugt mehr als 80 mol%, insbesondere mehr als 90 mol%, primäre OH-Gruppen.

Die Komponente a2) umfasst mindestens ein aromatisches oder aromatisch/aliphatisches Polyesterpolyol oder Polyetheresterpolyol. Dies bedeutet, dass die Komponente a2) einen aromatischen Anteil aufweist. In einer bevorzugten Ausführungsform sind mehr als 50 Gew.-% der Komponente a2) aromatische oder aromatisch/aliphatische Polyesterpolyole und/oder Polyetheresterpolyole, insbesondere mehr als 80 Gew.-%, und ganz besonders bevorzugt besteht die Komponente a2) aus aromatischen und/oder aromatisch/aliphatische Polyesterpolyolen und/oder Polyetheresterpolyolen.

Als weitere Komponente zur Herstellung der Polyolformulierung werden Polyetherpolyole a3) eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise $\geq$ 18 g/mol bis 400 $\leq$ g/mol, bevorzugt von $\geq$ 62 g/mol bis 200 $\leq$ g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit 3 zerewitinoff-aktiven Wasserstoffen, zum Beispiel 1,1,1-Trimethylolpropan, Triethanolamin, Glycerin, sowie auf Triolen gestartete Polyethylenoxidpolyole mit mittleren Molmassen Mn von vorzugsweise $\geq$ 62 g/mol bis $\leq$ 400 g/mol, insbesondere von $\geq$ 92 g/mol bis 200 $\leq$ g/mol.

Als Alkylenoxid-komponente wird eine Mischung aus Ethylenoxid und Propylenoxid eingesetzt mit einem Ethylenoxid-Gehalt von 15 bis 70 Gew.-%, bevorzugt 15-50 Gew.-%, insbesondere bevorzugt von 20 bis 40 Gew.%, bezogen auf die Gesamtmenge an Alkylenoxid.

Die Polyetherpolyole a3) werden nach bekannten Verfahren hergestellt, wie beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls oder Mischungen von Startermolekülen.

Das Polyetherpolyol a4) weist vorzugsweise eine Hydroxylzahl von $\geq$ 350 mg KOH/g bis $\leq$ 500 mg KOH/g und besonders bevorzugt von $\geq$ 390 mg KOH/g bis $\leq$ 440 mg KOH/g auf. Im Rahmen der vorliegenden Erfindung lassen sich Hydroxylzahlen generell anhand DIN 53240 bestimmen. Das Polyetherpolyol a4 wird durch Umsetzung wenigstens eines aromatischen Amins mit mindestens einem Alkylenoxid hergestellt. Bevorzugte aromatische Amine werden ausgewählt aus der Gruppe bestehend aus Toluylendiamin, Diaminodiphenylmethan und Polymethylen-polyphenylen-polyamin.

Als Alkylenoxid kann bevorzugt Ethylenoxid, Propylenoxid oder ein Gemisch davon verwendet werden. Ethylenoxid ist besonders bevorzugt. Die durchschnittliche Funktionalität dieses Polyetherpolyols a4) ist bevorzugt 4.

Das gewichtsmittlere Molekulargewicht der Polyetherpolyole a4) liegt vorzugsweise im Bereich zwischen 400 g/mol und 700 g/mol, besonders bevorzugt im Bereich zwischen 500 g/mol und 600 g/mol.

Die Polyetherpolyole a4) werden nach bekannten Verfahren hergestellt, wie beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines aromatischen Amins als Startermolekül mit einem oder mehreren Alkylenoxiden mit 2 bis 4 Kohlenstoffatomen im Alkylenrest.

Das Polyesterpolyol a5) kann beispielsweise ein Polykondensat aus Polyolen und aromatischen Di- sowie gegebenenfalls Tri- und Tetracarbonsäuren oder Hydroxycarbonsäuren oder Lactonen sein. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Polyole umfassen Ethylenglykol, Propylenglykol-(1,2) und -(1,3), Butylenglykol-(1,4) und -(2,3), Hexandiol-(1,6), Octandiol-(1,8), Neopentylglykol, 1,4-Bishydroxymethylcyclohexan, 2-Methyl-1,3-propandiol, Glycerin, Trimethylolethan, Hexantriol-(1,2,6), Butantriol-(1,2,4), Chinol, Methylglucosid, Triethylenglykol, Tetraethylenglykol und höhere Polyethylenglykole, Dipropylenglykol und höhere Polypropylenglykole, Diethylenglykol, Glycerin, Pentaerythrit, Trimethylolpropan, Sorbit, Mannit, Dibutylenglykol und höhere Polybutylenglykole. Besonders geeignete Polyole sind Alkylenglykole und Oxyalkylenglykole, zum Beispiel Ethylenglykol, Diethylenglykol, Dipropylenglykol, Triethylenglykol, Tripropylenglykol, Tetraethylenglykol, Tetrapropylenglykol, Trimethylenglykol, Tetramethylenglykol und 1,4-Cyclohexandimethanol (1,4-Bis-hydroxymethylcyclohexan).

Als aromatische Dicarbonsäuren können beispielsweise Phthalsäure, Isophthalsäure, Terephthalsäure und/oder Tetrachlorphthalsäure eingesetzt werden. Als Säurequelle können auch die entsprechenden Anhydride verwendet werden.

Sofern die mittlere Funktionalität des zu veresternden Polyols ≥ 2 ist, können zusätzlich auch Monocarbonsäuren wie Benzoesäure und Hexancarbonsäure mitverwendet werden.

Hydroxycarbonsäuren, die als Reaktionsteilnehmer bei der Herstellung eines aromatischen Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Bevorzugt wird das Polyesterpolyol a5) aus Phthalsäureanhydrid und Diethylenglykol erhalten.

Das Polyesterpolyol a5) weist eine Hydroxylzahl von ≥ 600 mg KOH/g bis ≤ 900 mg KOH/g und besonders bevorzugt ≥ 750 mg KOH/g bis ≤ 850 mg KOH/g auf. Im Rahmen der vorliegenden Erfindung lassen sich Hydroxylzahlen generell anhand DIN 53240 bestimmen. Die durchschnittliche Funktionalität dieses Polyesterpolyols a5) ist vorteilhafterweise ≥ 1,8 bis ≤ 2,2. Das gewichtsmittlere Molekulargewicht der Polyesterpolyole a5) liegt vorzugsweise im Bereich zwischen 130 g/mol und 400g/mol, besonders bevorzugt im Bereich zwischen 130 g/mol und 300 g/mol.

Weiterhin können in der Isocyanat-reaktiven Komponente A niedermolekulare Isocyanat-reaktive Verbindungen A2) enthalten sein, vorzugsweise di- oder trifunktionelle Amine und Alkohole, bevorzugt Diole und/oder Triole mit Molmassen $M_n$ kleiner als 400 g/mol, insbesondere von 60 bis 300 g/mol. Zum Einsatz kommen z.B. Triethanolamin, Diethylenglykol, Ethylenglykol und Glycerin. Sofern zur Herstellung der Polyurethan-Hartschaumstoffe solche niedermolekularen Isocyanat-reaktiven Verbindungen Anwendung finden, z.B. in der Funktion als Kettenverlängerungsmittel und/oder Vernetzungsmittel, kommen diese zweckmäßigerweise in einer Menge von bis zu 5 Gew.-%, bezogen auf das Gesamtgewicht der Komponente A, zum Einsatz.

Als Katalysator A3) zur Herstellung der PUR-/PIR-Schaumstoffe werden Verbindungen verwendet, welche die Reaktion der reaktiven Wasserstoffatome, insbesondere Hydroxylgruppen enthaltenden Verbindungen mit der Isocyanatkomponente B beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente A vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N''-Tris-(dialkylaminoalkyl)hexahydrotriazin, z.B. N,N',N''-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalimetallcarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator A3) kommen ferner in Betracht: Amidine, wie z. B. 2,3-Dimethyl-3,4,5,6-tetrahydropyrimidin, Tetraalkylammoniumhydroxide, wie z. B. Tetramethylammonium-hydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Gegebenenfalls können ein oder mehrere Hilfs- und Zusatzstoffe (Additive) als Komponente A4) eingesetzt werden. Beispiele für die Komponente A4) sind oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Sepiolit, Hornblenden, Amphibole, Chrisotil, Montmorillonit und Talkum, Metalloxide, wie Kaolin, Aluminiumoxide, Titanoxide und Eisenoxide, Metallsalze, wie Kreide, Huntit, Schwerspat und anorganische Pigmente, wie Magnetit, Goethit, Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Die Hilfs- und Zusatzstoffe umfassen bevorzugt auch Flammschutzmittel wie Phosphate, z. B. Triethylphosphat (TEP), Triphenylphosphat (TPP), Trikresylphosphat, Diphenylkresyl-phosphat (DPK), tert-Butylphenyldiphenylphosphat, Resorcinyldiphenylphosphat (auch als Oligomer) und Bisphenol-A-bis(diphenylphosphat) (auch als Oligomer), und Phosphonate, z.B. Diethylethylphosphonat (DEEP), Dimethylpropylphosphonat (DMPP), Diethanolaminomethylphosphonsäurediethylester, Veriquel® R100 bzw. "E06-16" von der Fa. ICL, und auch gemischte Phosphonate wie Ethylbutylhydroxymethylphosphonat sowie Phosphinate wie 9,10-Dihydro-9-oxa-10-phosphorylphenanthrene-10-oxid (DOPO), Salze der Diphenylphosphinigen Säure und Salze der Diethylphosphinigen Säure Et2PO2H (Exolit® OP 1235, Exolit® OP 935, Exolit® OP 935, Exolit® OP L 1030) eingesetzt werden. Weitere geeignete Flammschutzmittel sind beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat, sowie handelsübliche halogenhaltige Flammschutzpolyole. Bevorzugt sind Diphenylkresylphosphat, Triethylphosphat und Bisphenol-A-bis(Diphenylphosphat). Es ist besonders bevorzugt, dass kein halogenhaltiges Flammschutzmittel eingesetzt wird.

Die Komponente A enthält > 0 bis ≤ 1,5 Gew.-% Wasser (A5). Höhere Wassergehalte führen zu Versprödung und/oder zu schlechterer Haftung des Schaumes.

Die isocyanat-reaktive Komponente A ist bevorzugt im Wesentlichen auf die oben beschriebenen Komponenten A1) - A6) beschränkt. "Im Wesentlichen" bedeutet hierbei im Sinne dieser Anmeldung, dass weitere Komponenten, z.B. technische Verunreinigungen, andere reaktive oder nicht reaktive Verbindungen, Lösungsmittel oder ähnliches maximal in einem Gehalt von bis zu 10 Gew.-%, bevorzugt maximal bis zu 5 Gew.-%, insbesondere maximal bis zu 2 Gew.-% enthalten sind.

Die Erfindung betrifft ebenfalls ein Reaktionsgemisch, welches aus der isocyanat-reaktiven Komponente A und einer Isocyanatkomponente B hergestellt wird. Die Kennzahl des Reaktionsgemisches beträgt bevorzugt > 270, in einer ganz besonders bevorzugten Ausführungsform beträgt die Kennzahl 290 - 440.

Für die Herstellung von PUR-/PIR-Hartschäumen wird das Reaktionsgemisch in Gegenwart von

**C** Treibmitteln, insbesondere enthaltend eine oder mehrere Verbindungen ausgewählt aus der Gruppe bestehend aus halogenfreien chemischen Treibmitteln, halogenfreien physikalischen Treibmitteln und (hydro)fluorierten Olefinen,

umgesetzt.

Die Erfindung betrifft ebenfalls ein Verfahren zur Umsetzung der erfindungsgemäßen isocyanat-reaktiven Komponente **A** mit

**B** einer Isocyanatkomponente

in Gegenwart von

**C** Treibmittel, enthaltend eine oder mehrere Verbindungen ausgewählt aus der Gruppe bestehend aus halogenfreien chemischen Treibmitteln, halogenfreien physikalischen Treibmitteln und (hydro)fluorierten Olefinen,

zu PUR-/PIR-Hartschaumstoffen.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (monomeres MDI) und/oder höhere Homologe (oligomeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Mischungen aus oligomerem und gegebenenfalls monomerem MDI werden auch "polymeres MDI" genannt. Bevorzugt wird die Isocyanatkomponente **B** ausgewählt aus mindestens einer Verbindung aus der Gruppe bestehend aus polymerem MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten A beschriebenen Polyolen.

Die Herstellung der erfindungsgemäßen PUR-/PIR-Schaumstoffe erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden.

Das Treibmittel C kann einer der Komponenten A oder B, insbesondere A, zudosiert werden oder bei der Vermischung zugegeben werden. Als Treibmittel wird mindestens eine Verbindung, ausgewählt aus der Gruppe bestehend aus physikalischen und chemischen Treibmittel, eingesetzt.

Physikalische Treibmittel sind beispielsweise niedrig siedende organische Verbindungen, wie z.B. Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Als Treibmittel C kann auch chemisches Treibmittel, wie beispielsweise Wasser, Carbonsäure und deren Gemische, verwendet werden. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

In einer bevorzugten Ausführungsform wird eine Mischung eines physikalischen und eines chemischen Treibmittels eingesetzt. Der Anteil an Wasser in der Treibmittelmischung beträgt insbesondere < 10 Gew.-%, besonders bevorzugt < 5 Gew.-%, bezogen auf alle Treibmittel in der Reaktionsmischung. Das Treibmittel enthält bevorzugt nur so viel Wasser, dass das Gemisch aus den Komponenten A - C maximal 1,5 Gew.-% (bezogen auf die isocyanat-reaktive Komponente A) Wasser enthält.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

In dem erfindungsgemäßen Verfahren wird bevorzugt eine Kennzahl in einem Bereich von ≥ 180 eingesetzt, insbesondere in einem Bereich von ≥ 270. Die PIR-Strukturen führen zu einer höheren Flammwidrigkeit des Schaums selbst. In einer mehr bevorzugten Ausführungsform liegt die Kennzahl des Reaktionsgemischs bei 240-440, in einer ganz besonders bevorzugten Ausführungsform beträgt die Kennzahl 290 - 440.

Die Erfindung betrifft ebenfalls einen PUR-/PIR-Hartschaumstoff der durch das erfindungsgemäße Verfahren hergestellt ist. Die erfindungsgemäßen PUR-/PIR-Schaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Der erfindungsgemäße PUR-/PIR-Hartschaumstoff weist insbesondere eine Rohdichte von ≤ 45 kg/m$^3$ auf (bestimmt gemäß DIN EN ISO 3386-1 (Oktober 2015)).

Ein weiterer Gegenstand der Erfindung ist demzufolge die Verwendung eines erfindungsgemäßen PUR-/PIR-Schaumstoffes als Isolationsschaumstoff und/oder als Haftvermittler in Verbundelementen, wobei die Verbundelemente eine einen erfindungsgemäßen PUR-/PIR-Schaumstoff umfassende Schicht und mindestens eine Deckschicht umfassen. Die Deckschicht wird hierbei zumindest teilweise von einer den erfindungsgemäßen PUR-/PIR-Schaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln. Insbesondere handelt es sich bei mindestens einer Deckschicht um eine Deckschicht aus Metall (Metallverbundelement).

Die zahlengemittelte Molmasse Mn (auch: das gewichtsmittlere Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-1 (Juni 2013).

"Funktionalität" bezeichnet im Rahmen der vorliegenden Erfindung die theoretische, aus den bekannten Einsatzstoffen und deren Mengenverhältnissen berechnete zahlenmittlere Funktionalität (Anzahl an gegenüber Isocyanaten bzw. gegenüber Polyolen reaktiven Funktionen im Molekül).

Der NCO-Wert (auch: NCO-Gehalt, Isocyanatgehalt) wird bestimmt mittels EN ISO 11909 (Mai 2007).

## Beispiele

Die OH-Zahl (Hydroxylzahl) wurde gemäß DIN 53240-1 (Juni 2013) bestimmt. Die Bestimmung der Säurezahl wurde gemäß DIN EN ISO 2114 (November 2006) durchgeführt. Der NCO-Wert (auch: NCO-Gehalt, Isocyanatgehalt) wird bestimmt mittels EN ISO 11909 (Mai 2007).

## Herstellung der Metallverbundelemente:

Die Herstellung von PUR-/PIR-Verbundelementen auf Basis der in den Tabellen beschriebenen Formulierungen erfolgt nach dem Fachmann bekannten Einstufenverfahren, bei dem die Reaktionskomponenten kontinuierlich miteinander zur Reaktion gebracht werden und dann anschließend durch Zuhilfenahme maschineller Einrichtungen nach Austrag auf ein Transportband bei 60°C zur Aushärtung gebracht werden. Als Deckschichten wurden Stahlcoils in der Dicke 0,45 mm oben und unten von der Fa. ArcelorMittal Construction verwendet. Im Anschluss wurden die 2m Elemente in einem Kühligel für 24h gelagert. Die Rezepturen und Ergebnisse der physikalischen Messungen an den erhaltenen Proben sind in den Tabellen wiedergegeben.

## Messertest:

Um die Anfälligkeit bei der Bearbeitung von Metallverbundelementen hinsichtlich Rissbildung in der Kälte zu bewerten, wurde ein sogenannter Messertest durchgeführt. Die Metallverbundelemente wurden in einer Kühlkammer für 24 h bei entweder 0, -10 bzw. -20°C gelagert und direkt im Anschluss mit einem Messer im Zentrum der Schaumschicht an mehreren Positionen (zentrumsnah und in der Nähe der Fuge bzw. Nase) eingestochen. Paneele, die bei Raumtemperatur getestet wurden, wurden direkt nach Abstapelung vom Kühligel eingesetzt. Paneele, bei denen sich bei leichtem Drehen der Messerklinge oder sogar schon bei Einstechen der Klinge selbst Risse parallel zur Produktionsrichtung ausbildeten, galten als durchgefallen. Lautes Knacken während des Einstechens gilt als Anzeichen einer vorhandenen Spannung und gilt auch als Durchfallkriterium. Wurden keine Knackgeräusche vermerkt und bildeten sich keine Längsrisse aus, so wurde der Test als bestanden erklärt.

## Verwendete Rohstoffe:

| Polyol P1-a | Aromatisches Polyesterpolyol (a1) hergestellt durch Umsetzung von Phtalsäureanhydrid, Adipinsäure, Ethylenglykol und Diethylenglykol mit einer OH-Zahl von 240 mg KOH/g der Fa. Covestro Deutschland AG |
|---|---|
| Polyol P 1-b | Aromatisches Polyesterpolyol (a1) auf Basis von rezykliertem Polyethylenterephtalat mit einer OH-Zahl von 230-240 mg KOH/g der Fa. Synthesia Technology |
| Polyol P 2-a | Aromatisches Polyesterpolyol (a2) hergestellt durch Umsetzung von Trimethylolpropan, Phtalsäureanhydrid, Sojaölfettsäure und Adipinsäure mit einer OH-Zahl von 370 mg KOH/g der Fa. Covestro Deutschland AG |
| Polyol P4-a | Polyetherpolyol (a4) auf Basis von ortho-Toluoldiamin, Ethylenoxid und Propylenoxid mit einer OH-Zahl von 415 mg KOH/g und Funktionalität von 4 der Fa. Covestro Deutschland AG |
| Polyol P4-b | Polyetherpolyol auf Basis von Sucrose, Propylenglykol und Proyplenoxid mit einer OH-Zahl von 450 mg KOH/g und einer Funktionalität von 4,6 der Fa. Covestro Deutschland AG |
| Polyol P5-a | Polyesterpolyol (a5) aus Phthalsäureanhydrid und Diethylenglykol mit einer OH-Zahl von 795 mg KOH/g der Fa. Covestro Deutschland AG |
| Polyol P3-a | Polyetherpolyol (a3) auf Basis von Propylenglykol, Ethylenoxid und Propylenoxid im Verhältnis (29,8 %/70,2 %) mit einer OH-Zahl von 28 mg KOH/g und einer Funktionalität von 2 der Fa. Covestro Deutschland AG |
| Polyol P3-b | Polyetherpolyol auf Basis von Glycerin, Propylenoxid und Ethylenoxid im Verhältnis (72,7 %/27,3 %) mit einer OH-Zahl von 37 mg KOH/g und Funktionalität von 3 der Fa. Covestro Deutschland AG |

(fortgesetzt)

| | |
|---|---|
| Polyol P3-c | Polyetherpolyol auf Basis von Propylenglykol, Ethylenoxid und Propylenoxid im Verhältnis (13,3 %/86,7 %) mit einer OH-Zahl von 28 mg KOH/g und Funktionalität von 2 der Fa. Covestro Deutschland AG |
| Polyol P3-d | Polyetherpolyol auf Basis von Glycerin, Monopropylenglykol, Ethylenoxid und Propylenoxid im Verhältnis (1 %/99 %) mit einer OH-Zahl von 44,5 mg KOH/g und Funktionalität von 2,98 der Fa. Covestro Deutschland AG |
| Rizinusöl | Rizinusöl |
| TCPP | Tris(1-chloro-2-propyl)-phosphat der Fa. Lanxess GmbH |
| TEP | Triethylphosphat der Fa. Lanxess GmbH |
| TP | Triphenylphosphat der Fa. Lanxess GmbH |
| Veriquel R100 | Halogenfreies, phosphor-haltiges Flammschutzmittel mit einer OH-Zahl von 270 mg KOH/g der Fa. ICL Industrial Products |
| Stabilisator B8443 | Polyetherpolysiloxancopolymerisat der Fa. Evonik |
| Desmodur® 44V70L | polymeres Polyisocyanat auf Basis 4,4-Diphenylmethandiisocyanat mit einem NCO-Gehalt von ca. 31,5 Gew.-% Fa. Covestro Deutschland AG |
| Zusatzmittel CA | Kohlendioxid-freisetzendes Additiv auf Basis von Monoisopropanolamin der Fa. Covestro Deutschland AG |
| Desmorapid® DB | Benzyldimethylamin der Fa. Covestro Deutschland AG, Leverkusen, Deutschland |
| Desmorapid® 1792 | Kaliumacetat (Kaliumethanoat nach IUPAC), 25 wt-% in Diethylenglykol |
| Desmorapid® 30HB 14 | Kaliumformiat (Kaliummethanoat nach IUPAC) 36 wt-% in Monoethylenglykol |

**Zusammensetzung der Polyolformulierungen und Ergebnisse der Messertests:**

**Tabelle 1: Messertest an unterschiedlich lange gealterten Paneelen mit einer Elementdicke von 100 mm.**

| Komponenten | | Beispiel 1* | Beispiel 2* | Beispiel 3* | Beispiel 4* |
|---|---|---|---|---|---|
| Polyol P1-a | [Tle] | 66,5 | 66,5 | 66,5 | 66,5 |
| Polyol P4-a | [Tle] | 5,2 | 5,2 | 5,2 | 5,2 |
| TCPP | [Tle] | 20,8 | 20,8 | 20,8 | 20,8 |
| TEP | [Tle] | 5,2 | 5,2 | 5,2 | 5,2 |
| Polyol P5-a | [Tle] | 2,3 | 2,3 | 2,3 | 2,3 |
| B8443 | [Tle] | 2,5 | 2,5 | 2,5 | 2,5 |
| Zusatzmittel CA | [Tle] | 1,5 | | | |
| Desmorapid DB | [Tle] | | 1,5 | 1,0 | 2,5 |
| Desmorapid 1792 | [Tle] | 4,1 | 4,6 | | |
| Desmorapid 30HB14 | [Tle] | | | 2,9 | 2,2 |
| 44V70L | [Tle] | 228,0 | 197,0 | 195,0 | 190,0 |
| n-Pentan | [Tle] | 17,0 | 16,0 | 15,4 | 15,0 |
| Index (100 NCO/OH) | | 344,0 | 344,0 | 345,0 | 348,0 |
| Risse @ -20°C, 48h | | ja | ja | ja | ja |
| Risse @ -20°C, 4w | | ja | ja | ja | ja |
| Risse @ -20°C, 8w | | nein | nein | nein | nein |

**Tabelle 1** fasst die Ergebnisse zu den Messertestversuchen bei -20°C von Metallpaneelen mit einer Elementdicke von 100 mm zusammen, die mit einer nicht erfindungsgemäßen Rezeptur (ohne Komponente a3) mit verschiedenen Katalysatorpaketen bzw. Katalysatorverhältnissen hergestellt worden sind.

Paneele auf Basis einer nicht erfindungsgemäßen Polyolformulierung reißen im Schaum, wenn diese bei einer Temperatur von -20°C (@ -20°C) 48h nach Produktionsdatum dem Messertest unterzogen werden. Auch Paneele, die bei Raumtemperatur vier Wochen (4w) lang gelagert und anschließend bei -20°C mit dem Messer angestochen wurden, zeigten das gleiche Schadensbild. Dahingegen konnte keine Rissbildung festgestellt werden, wenn die Paneele für weitere vier Wochen (insgesamt acht Wochen (8w)) gelagert wurden, bevor der Messertest durchgeführt worden ist.

**Tabelle 2 Messertestversuche mit 100mm-Paneelen.**

| Komponente | Einheit | Beispiel 5* | Beispiel 6 | Beispiel 7* | Beispiel 8* | Beispiel 9* |
|---|---|---|---|---|---|---|
| Polyol P1-a | [Tle] | 66,5 | 56,5 | 56,5 | 56,5 | 56,5 |
| Polyol P1-b | [Tle] | | | | | |
| Polyol P4-a | [Tle] | 5,2 | 5,2 | 5,2 | 5,2 | 5,2 |
| Polyol P3-a | [Tle] | | 10,0 | | | |
| Polyol P3-b | [Tle] | | | 10,0 | | |
| Polyol P3-c | | | | | 10 | |
| Polyol P3-d | | | | | | 10,0 |
| TCPP | [Tle] | 20,8 | 20,8 | 20,8 | 20,8 | 20,8 |
| TEP | [Tle] | 5,2 | 5,2 | 5,2 | 5,2 | 5,2 |
| Polyol P5-a | [Tle] | 2,3 | 2,3 | 2,3 | 2,3 | 2,3 |
| B8443 | [Tle] | 3,0 | 3,0 | 3,0 | 3 | 3,0 |
| Desmorapid DB | [Tle] | 1,5 | 0,8 | 0,5 | 1,2 | 1,5 |
| Desmorapid 1792 | [Tle] | 4,1 | 3,2 | 3,0 | 3,3 | 3,6 |
| 44V70L | [Tle] | 185,0 | 165,0 | 165,0 | 167,4 | 170,4 |
| n-Pentan | [Tle] | 15,5 | 15,5 | 15,2 | 15,2 | 15,4 |
| Index (100 NCO/OH) | | 322,4 | 326,6 | 327,7 | 330 | 330 |
| Risse/Knacken @ -20°C* | | ja/ja | nein/nein | nein/ja | ja/ja | ja/ja |
| Risse/Knacken @ -10°C* | | nein/ja | nein/nein | nein/nein | nein/nein | ja/ja |
| Oberflächenbild Oberseite | | + | + | + | + | - |
| Oberflächenbild Unterseite | | + | + | + | + | - |
| **\* Messertests wurden 3 Wochen nach Herstellung der Elemente durchgeführt.** | | | | | | |

**Tabelle 3 Untersuchung der Oberflächenstörungen bei 100 mm Paneelen.**

| Komponente | | Beispiel 10 | Beispiel 11* |
|---|---|---|---|
| Polyol P1-a | [Tle] | 56,5 | 56,5 |
| Polyol P4-a | [Tle] | 5,2 | 5,2 |
| Polyol P3-a | [Tle] | 10,0 | |
| Polyol P3-b | [Tle] | | 10,0 |
| TCPP | [Tle] | 20,8 | 20,8 |
| TEP | [Tle] | 5,2 | 5,2 |
| Polyol P5-a | [Tle] | 2,3 | 2,3 |
| B8443 | [Tle] | 2,0 | 2,0 |
| Desmorapid DB | [Tle] | 0,8 | 0,5 |
| Desmorapid 1792 | [Tle] | 3,2 | 3,0 |
| 44V70L | [Tle] | 165,0 | 165,0 |

(fortgesetzt)

| Komponente | | Beispiel 10 | Beispiel 11* |
|---|---|---|---|
| n-Pentan | [Tle] | 15,5 | 15,2 |
| Index (100 NCO/OH) | | 326,6 | 327,7 |
| Oberflächenbild Oberseite | | + | + |
| Oberflächenbild Unterseite | | + | - |

Die Ergebnisse in Tabelle 2 zeigen, dass bei Paneelen mit einer Elementdicke von 100 mm, die mit einer erfindungsgemäßen Polyolformulierung produziert und innerhalb der ersten drei Wochen nach Produktion dem Messertest bei -20°C unterworfen wurden, bei dieser Temperatur keine Risse entstehen und bei Einstechen des Messer auch keine Knackgeräusche entstehen, die auf vorhandene Spannungen im Paneel hindeuten. Desweiteren verfügen die Elemente, die Polyole a3 mit einem erfindungsgemäßen EO/PO-Verhältnis enthalten, über bessere Oberflächenqualitäten als jene mit Komponenten a3 abweichender Zusammensetzung (siehe Tabelle 2 und Tabelle 3). Des Weiteren wird aus Tabelle 4 ersichtlich, dass bei Paneelen auf Basis von nicht-erfindungsgemäßen Formulierungen mit ≤5 Gewichtsteilen eines Polyols a3 in der Polyolformulierung bei -20°C Rissbildungen im Messertest zu beobachten sind.

**Tabelle 4 Messertestversuche mit 100mm-Paneelen bei unterschiedlichen Anteilen an Polyol a3.**

| Komponenten | | Beispiel 12* | Beispiel 13* | Beispiel 14* | Beispiel 15 | Beispiel 16 | Beispiel 17 |
|---|---|---|---|---|---|---|---|
| Polyol P1-b | [Tle] | 89,2 | 89,5 | 68,8 | 74,00 | 77,00 | 67,00 |
| Polyol P1-a | [Tle] | | | | | | 10,00 |
| Polyol P2-a | [Tle] | | | | | 2,00 | 2,00 |
| Polyol P4-b | [Tle] | | | 10,0 | | | |
| Polyol P4-a | [Tle] | | | 5,2 | | | |
| Polyol P3-a | [Tle] | 0,0 | 0,0 | 5,0 | 10,00 | 10,00 | 10,00 |
| Rizinusöl | [Tle] | | | | 5,00 | | |
| TEP | [Tle] | 10,0 | 10,0 | 10,0 | 10,00 | 10,00 | 10,00 |
| Polyol P5-a | [Tle] | | | 0,5 | 0,5 | 0,5 | 0,5 |
| Wasser | [Tle] | 0,8 | 0,5 | 0,5 | 0,5 | 0,5 | 0,5 |
| B8443 | [Tle] | 3,0 | 3,0 | 3,0 | 2,5 | 2,5 | 2,5 |
| Desmorapid DB | [Tle] | 1,0 | 1,0 | 1,2 | 1,4 | 1,4 | 1,4 |
| Desmorapid 1792 | [Tle] | 3,8 | 3,5 | 3,4 | 2,9 | 2,7 | 2,7 |
| 44V70L | [Tle] | 226,0 | 210,0 | 240,0 | 201 | 205 | 205 |
| n-Pentan | [Tle] | 14,2 | 14,5 | 16,7 | 14,4 | 15 | 14,6 |
| Index (100 NCO/OH) | | 319,0 | 320,0 | 331,0 | 334 | 335 | 335 |
| Risse/Knacken @ -20°C* | | ja/ja | ja/ja | ja/ja | nein/nein | nein/nein | nein/nein |
| **\*Messertests wurden 3 Wochen nach Herstellung der Elemente durchgeführt.** | | | | | | | |

**Patentansprüche**

1.   Isocyanat-reaktive Komponente **A),** welche folgende Komponenten enthält:

   **A1)** eine Polyolformulierung, umfassend

      50-80 Gew.-% einer Polyolkomponente **a1)** bestehend aus einem oder mehreren Polyolen ausgewählt aus Polyesterpolyolen, Polycarbonatpolyolen oder Polyetheresterpolyolen mit einer Hydroxylzahl von 100 bis 300 mg KOH/g und einer mittleren Funktionalität von 1,5 bis 2,5, wobei die Polyolkomponente a1) mindestens ein aromatisches oder aromatisch/aliphatisches Polyesterpolyol oder Polyetheresterpolyol umfasst,

0 - 5 Gew.-% einer Polyolkomponente **a2)** bestehend aus einem oder mehreren Polyolen ausgewählt aus Polyesterpolyolen und Polyetheresterpolyolen mit einer Hydroxylzahl von 320 bis 450 mg KOH/g und einer mittleren Funktionalität von 3 bis 4,5, wobei die Polyolkomponente a2) mindestens ein aromatisches oder ein aromatisch/aliphatisches Polyesterpolyol oder Polyetheresterpolyol umfasst,

8,0 - 12,0 Gew.-% einer Polyolkomponente **a3)** bestehend aus einem oder mehreren Polyolen ausgewählt aus Polyetherpolyolen mit einer OH-Zahl von 10 bis 80 KOH/g und einer mittleren Funktionalität von $\geq 2,0$ bis $\leq 3,0$, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO,

0,0 - 7,5 Gew.-% einer Polyolkomponente **a4)** bestehend aus einem oder mehreren Polyolen ausgewählt aus Polyetherpolyolen mit einer OH-Zahl im Bereich von 350 -500 mg KOH/g, hergestellt durch Alkoxylierung eines aromatischen Amins mit mindestens einem Alkylenoxid,

0,0 - 3,0 Gew.-% einer Polyolkomponente **a5)** bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;

**A2)** 0 - 5 Gew.-% niedermolekulare isocyanat - reaktive Verbindungen,
sowie
**A3)** gegebenenfalls Katalysatoren,
**A4)** gegebenenfalls Hilfs- und Zusatzstoffe,
**A5)** 0 - 1,5 Gew.-% Wasser und
**A6)** 0 - 7,5 Gew.-% (insbesondere bevorzugt 0 - 5 Gew.-%) Rizinusöl,
wobei alle Gewichtsprozent-Angaben jeweils bezogen auf das Gesamtgewicht von A sind.

2. Isocyanat-reaktive Komponente A) gemäß Anspruch 1, wobei mehr als 50 Gew.-% der Komponente a1), insbesondere mehr als 80 Gew.-%, aromatische und/oder aromatisch/aliphatische Polyesterpolyole und/oder Polyetheresterpolyole sind.

3. Isocyanat-reaktive Komponente A) gemäß Anspruch 1 oder 2, wobei zur Alkoxylierung der Polyetherpolyole in der Komponente a3) eine Mischung aus Ethylenoxid und Propylenoxid mit einem Ethylenoxid-Gehalt von 15-50 Gew.-% eingesetzt wird.

4. Isocyanat-reaktive Komponente A) gemäß einem der vorangehenden Ansprüche, wobei die Polyetherpolyole der Komponente a4) auf Toluylendiamin, Diaminodiphenylmethan und/oder Polymethylen-polyphenylen-polyamin gestartet sind.

5. Isocyanat-reaktive Komponente gemäß einem der vorangehenden Ansprüche, wobei als Polyolkomponente a5) ein Polyesterpolyol eingesetzt wird, welches aus Phthalsäureanhydrid und Diethylenglykol erhältlich ist.

6. Isocyanat-reaktive Komponente gemäß einem der vorangehenden Ansprüche enthaltend > 0 bis $\leq$ 1,5 Gew.-% Wasser (A5).

7. Reaktionsgemisch aus einer isocyanat-reaktiven Komponente A gemäß einem der Ansprüche 1 bis 6 und einer Isocyanatkomponente **B,** wobei das Reaktionsgemisch bevorzugt eine Kennzahl > 270, in einer ganz besonders bevorzugten Ausführungsform 290 - 440 beträgt.

8. Verfahren zur Umsetzung eines Reaktionsgemisches aus einer isocyanat-reaktiven Komponente A gemäß einem der Ansprüche 1 - 6 mit

**B** einer Isocyanatkomponente
in Gegenwart von
C Treibmittel, enthaltend eine oder mehrere Verbindungen ausgewählt aus der Gruppe bestehend aus halogenfreien chemischen Treibmitteln, halogenfreien physikalischen Treibmitteln und (hydro)fluorierten Olefinen.

9. Verfahren gemäß Anspruch 8, wobei das Reaktionsgemisch einen Isocyanat-Index von $\geq$ 180, bevorzugt $\geq$ 270, insbesondere 290 - 440 aufweist.

10. Herstellung von PUR-/PIR-Hartschaumstoffen umfassend ein Verfahren gemäß einem der Ansprüche 8 oder 9.

11. PUR-/PIR-Hartschaumstoff erhältlich durch ein Verfahren gemäß Anspruch 8, 9 oder 10, insbesondere mit einer Rohdichte von $\leq 45$ kg/m$^3$.

12. Verwendung eines PUR-/PIR-Hartschaumstoffes gemäß Anspruch 11 als Isolationsschaumstoff und/oder als Haftvermittler in Verbundelementen, wobei die Verbundelemente eine den PUR-/PIR-Hartschaumstoff umfassende Schicht und mindestens eine Deckschicht umfassen.

13. Verbundelemente, welche einen Kern aus einem PUR-/PIR-Hartschaumstoff hergestellt unter Verwendung eines Verfahrens zur Umsetzung eines Reaktionsgemisches aus einer isocyanat-reaktiven Komponente A mit

> **B** einer Isocyanatkomponente
> in Gegenwart von
> **C** Treibmittel, enthaltend eine oder mehrere Verbindungen ausgewählt aus der Gruppe bestehend aus halogenfreien chemischen Treibmitteln, halogenfreien physikalischen Treibmitteln und (hydro)fluorierten Olefinen, **dadurch gekennzeichnet, dass** die
> Isocyanat-reaktive Komponente **A)** folgende Komponenten enthält:

>> **A1)** eine Polyolformulierung, umfassend

>>> 50-80 Gew.-% einer Polyolkomponente **a1)** bestehend aus einem oder mehreren Polyolen ausgewählt aus Polyesterpolyolen, Polycarbonatpolyolen oder Polyetheresterpolyolen mit einer Hydroxylzahl von 100 bis 300 mg KOH/g und einer mittleren Funktionalität von 1,5 bis 2,5, wobei die Polyolkomponente a1) mindestens ein aromatisches oder aromatisch/aliphatisches Polyesterpolyol oder Polyetheresterpolyol umfasst,
>>> 0 - 5 Gew.-% einer Polyolkomponente **a2)** bestehend aus einem oder mehreren Polyolen ausgewählt aus Polyesterpolyolen und Polyetheresterpolyolen mit einer Hydroxylzahl von 320 bis 450 mg KOH/g und einer mittleren Funktionalität von 3 bis 4,5, wobei die Polyolkomponente a2) mindestens ein aromatisches oder ein aromatisch/aliphatisches Polyesterpolyol oder Polyetheresterpolyol umfasst,
>>> 7,0 - 15,0 Gew.-% einer Polyolkomponente **a3)** bestehend aus einem oder mehreren Polyolen ausgewählt aus Polyetherpolyolen mit einer OH-Zahl von 10 bis 80 KOH/g und einer mittleren Funktionalität von $\geq 2,0$ bis $\leq 3,0$, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO,
>>> 0,0 - 7,5 Gew.-% einer Polyolkomponente **a4)** bestehend aus einem oder mehreren Polyolen ausgewählt aus Polyetherpolyolen mit einer OH-Zahl im Bereich von 350 -500 mg KOH/g, hergestellt durch Alkoxylierung eines aromatischen Amins mit mindestens einem Alkylenoxid,
>>> 0,0 - 3,0 Gew.-% einer Polyolkomponente **a5)** bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;

>> **A2)** 0 - 5 Gew.-% niedermolekulare isocyanat - reaktive Verbindungen,
>> sowie
>> **A3)** gegebenenfalls Katalysatoren,
>> **A4)** gegebenenfalls Hilfs- und Zusatzstoffe,
>> **A5)** 0 - 1,5 Gew.-% Wasser und
>> **A6)** 0 - 7,5 Gew.-% (insbesondere bevorzugt 0 - 5 Gew.-%) Rizinusöl,

> wobei alle Gewichtsprozent-Angaben jeweils bezogen auf das Gesamtgewicht von A sind.

14. Verbundelemente gemäß Anspruch 13, welche einen Kern aus einem PUR-/PIR-Hartschaumstoff und eine oder zwei Deckschichten enthalten.

15. Verbundelemente gemäß Anspruch 14, wobei mindestens eine der zwei Deckschichten aus Metall ist.

**Claims**

1.  Isocyanate-reactive component A) containing the following components:

    A1) a polyol formulation comprising

    50-80% by weight of a polyol component a1) consisting of one or more polyols selected from polyester polyols, polycarbonate polyols or polyether ester polyols having a hydroxyl number of 100 to 300 mg KOH/g and an average functionality of 1.5 to 2.5, wherein the polyol component a1) comprises at least one aromatic or aromatic/aliphatic polyester polyol or polyether ester polyol,
    0-5% by weight of a polyol component a2) consisting of one or more polyols selected from polyester polyols and polyether ester polyols having a hydroxyl number of 320 to 450 mg KOH/g and an average functionality of 3 to 4.5, wherein the polyol component a2) comprises at least one aromatic or an aromatic/aliphatic polyester polyol or polyether ester polyol,
    8.0-12.0% by weight of a polyol component a3) consisting of one or more polyols selected from polyether polyols having an OH number of 10 to 80 mg KOH/g and an average functionality of ≥ 2.0 to ≤ 3.0 produced by alkoxylation of a suitable starter component with a mixture of ethylene oxide (EO) and propylene oxide (PO) having an EO content of 15-70% by weight based on the total amount of EO and PO,
    0.0-7.5% by weight of a polyol component a4) consisting of one or more polyols selected from polyether polyols having an OH number in the range of 350-500 mg KOH/g produced by alkoxylation of an aromatic amine with at least one alkylene oxide,
    0.0-3.0% by weight of a polyol component a5) consisting of one or more polyols selected from polyester polyols having an OH number in the range of 600-900 mg KOH/g, in particular of 750-850 mg KOH/g;

    A2) 0-5% by weight of low molecular weight isocyanate-reactive compounds
    and
    A3) optionally catalysts,
    A4) optionally auxiliary and additive substances,
    A5) 0-1.5% by weight of water and
    A6) 0-7.5% by weight (especially preferably 0-5% by weight) of castor oil,
    wherein all percentages by weight are in each case based on the total weight of A.

2.  Isocyanate-reactive component A) according to Claim 1, wherein more than 50% by weight of component a1), especially more than 80% by weight, are aromatic and/or aromatic/aliphatic polyester polyols and/or polyether ester polyols.

3.  Isocyanate-reactive component A) according to Claim 1 or 2, wherein a mixture of ethylene oxide and propylene oxide having an ethylene oxide content of 15-50% by weight is used for alkoxylation of the polyether polyols in component a3).

4.  Isocyanate-reactive component A) according to any of the preceding claims, wherein the polyether polyols of component a4) are started on the basis of tolylenediamine, diaminodiphenylmethane and/or polymethylene-polyphenylene-polyamine.

5.  Isocyanate-reactive component according to any of the preceding claims, wherein the polyol component a5) employed is a polyester polyol obtainable from phthalic anhydride and diethylene glycol.

6.  Isocyanate-reactive component according to any of the preceding claims containing > 0% to ≤ 1.5% by weight of water (A5).

7.  Reaction mixture consisting of an isocyanate-reactive component A according to any of Claims 1 to 6 and an isocyanate component B, wherein the reaction mixture preferably has an index > 270, in a very particularly preferred embodiment 290 - 440.

8.  Process for reacting a reaction mixture of an isocyanate-reactive component A according to any of Claims 1-6 with

    B an isocyanate component
    in the presence of

C blowing agent containing one or more compounds selected from the group consisting of halogen-free chemical blowing agents, halogen-free physical blowing agents and (hydro)fluorinated olefins.

9. Process according to Claim 8, wherein the reaction mixture has an isocyanate index of $\geq 180$, preferably $\geq 270$, in particular 290-440.

10. Production of rigid PUR/PIR foams comprising a process according to any of Claims 8 or 9.

11. Rigid PUR/PIR foam obtainable by a process according to Claim 8, 9 or 10, in particular having a bulk density of $\leq 45$ kg/m$^3$.

12. Use of a rigid PUR/PIR foam according to Claim 11 as an insulation foam and/or as an adhesion promoter in composite elements, wherein the composite elements comprise a layer comprising the rigid PUR/PIR foam, and at least one outer layer.

13. Composite elements which have a core of a rigid PUR/PIR foam produced using a process for reacting a reaction mixture of an isocyanate-reactive component A with

> B an isocyanate component
> in the presence of
> C blowing agent containing one or more compounds selected from the group consisting of halogen-free chemical blowing agents, halogen-free physical blowing agents and (hydro)fluorinated olefins,
> **characterized in that** the
> isocyanate-reactive component A) contains the following components:

>> A1) a polyol formulation comprising

>>> 50-80% by weight of a polyol component a1) consisting of one or more polyols selected from polyester polyols, polycarbonate polyols or polyether ester polyols having a hydroxyl number of 100 to 300 mg KOH/g and an average functionality of 1.5 to 2.5, wherein the polyol component a1) comprises at least one aromatic or aromatic/aliphatic polyester polyol or polyether ester polyol,
>>> 0-5% by weight of a polyol component a2) consisting of one or more polyols selected from polyester polyols and polyether ester polyols having a hydroxyl number of 320 to 450 mg KOH/g and an average functionality of 3 to 4.5, wherein the polyol component a2) comprises at least one aromatic or an aromatic/aliphatic polyester polyol or polyether ester polyol,
>>> 7.0-15.0% by weight of a polyol component a3) consisting of one or more polyols selected from polyether polyols having an OH number of 10 to 80 mg KOH/g and an average functionality of $\geq 2.0$ to $\leq 3.0$ produced by alkoxylation of a suitable starter component with a mixture of ethylene oxide (EO) and propylene oxide (PO) having an EO content of 15-70% by weight based on the total amount of EO and PO,
>>> 0.0-7.5% by weight of a polyol component a4) consisting of one or more polyols selected from polyether polyols having an OH number in the range of 350-500 mg KOH/g produced by alkoxylation of an aromatic amine with at least one alkylene oxide,
>>> 0.0-3.0% by weight of a polyol component a5) consisting of one or more polyols selected from polyester polyols having an OH number in the range of 600-900 mg KOH/g, in particular of 750-850 mg KOH/g;

>> A2) 0-5% by weight of low molecular weight isocyanate-reactive compounds
>> and
>> A3) optionally catalysts,
>> A4) optionally auxiliary and additive substances,
>> A5) 0-1.5% by weight of water and
>> A6) 0-7.5% by weight (especially preferably 0-5% by weight) of castor oil,

> wherein all percentages by weight are in each case based on the total weight of A.

14. Composite elements according to Claim 13 containing a core of a rigid PUR/PIR foam and one or two outer layers.

15. Composite elements according to Claim 14, wherein at least one of the two outer layers is made of metal.

**Revendications**

1. Composant réactif vis-à-vis d'isocyanate A), qui contient les composants suivants :

    A1) une formulation de polyol, comprenant

    50-80% en poids d'un composant polyol a1) constitué par un ou plusieurs polyols choisis parmi les polyesterpolyols, les polycarbonatepolyols ou les polyétheresterpolyols présentant un indice d'hydroxyle de 100-300 mg de KOH/g et une fonctionnalité moyenne de 1,5-2,5, le composant polyol a1) comprenant au moins un polyesterpolyol ou polyétheresterpolyol aromatique ou aromatique/aliphatique,
    0-5% en poids d'un composant polyol a2) constitué par un ou plusieurs polyols choisis parmi les polyesterpolyols et les polyétheresterpolyols présentant un indice d'hydroxyle de 320-450 mg de KOH/g et une fonctionnalité moyenne de 3-4,5, le composant polyol a2) comprenant au moins un polyesterpolyol ou polyétheresterpolyol aromatique ou aromatique/aliphatique,
    8,0-12,0 % en poids d'un composant polyol a3) constitué par un ou plusieurs polyols choisis parmi les polyétherpolyols présentant un indice d'OH de 10-80 mg de KOH/g et présentant une fonctionnalité moyenne de $\geq 2,0$ à $\leq 3,0$, préparés par alcoxylation d'un composant de départ approprié avec un mélange d'oxyde d'éthylène (OE) et d'oxyde de propylène (OP) présentant une teneur en OE de 15-70% en poids, par rapport à la quantité totale d'OE et d'OP,
    0,0-7,5% en poids d'un composant polyol a4) constitué par un ou plusieurs polyols choisis parmi les polyétherpolyols présentant un indice d'OH dans la plage de 350-500 mg de KOH/g, préparés par alcoxylation d'une amine aromatique avec au moins un oxyde d'alkylène, 0,0-3,0% en poids d'un composant polyol a5) constitué par un ou plusieurs polyols choisis parmi les polyesterpolyols présentant un indice d'OH dans la plage de 600-900 mg de KOH/g, en particulier de 750-850 mg de KOH/g ;

    A2) 0-5% en poids de composés de bas poids moléculaire réactifs vis-à-vis d'isocyanate,
    ainsi que
    A3) le cas échéant des catalyseurs,
    A4) le cas échéant des adjuvants et des additifs,
    A5) 0-1,5% en poids d'eau et
    A6) 0-7,5 % en poids (en particulier de préférence 0-5% en poids) d'huile de ricin,
    toutes les indications de pourcentage en poids se rapportant à chaque fois au poids total de A.

2. Composant réactif vis-à-vis d'isocyanate A) selon la revendication 1, plus de 50% en poids du composant a1), en particulier plus de 80% en poids, étant des polyesterpolyols et/ou des polyétheresterpolyols aromatiques et/ou aromatiques/aliphatiques.

3. Composant réactif vis-à-vis d'isocyanate A) selon la revendication 1 ou 2, un mélange d'oxyde d'éthylène et d'oxyde de propylène présentant une teneur en oxyde d'éthylène de 15-50% en poids étant utilisé pour l'alcoxylation des polyétherpolyols dans le composant a3).

4. Composant réactif vis-à-vis d'isocyanate A) selon l'une des revendications précédentes, les polyétherpolyols du composant a4) étant initiés sur base de toluylènediamine, de diaminodiphénylméthane et/ou de polyméthylène-polyphénylène-polyamine.

5. Composant réactif vis-à-vis d'isocyanate selon l'une des revendications précédentes, un polyesterpolyol qui peut être obtenu à partir d'anhydride de l'acide phtalique et de diéthylèneglycol étant utilisé comme composant polyol a5).

6. Composant réactif vis-à-vis d'isocyanate selon l'une des revendications précédentes, contenant $> 0$ à $\leq 1,5\%$ en poids d'eau (A5).

7. Mélange réactionnel constitué par un composant réactif vis-à-vis d'isocyanate A selon l'une des revendications 1 à 6 et un composant isocyanate B, le mélange réactionnel présentant de préférence un indice > 270, dans un mode de réalisation tout particulièrement préféré de 290-440.

8. Procédé de transformation d'un mélange réactionnel constitué par un composant réactif vis-à-vis d'isocyanate A selon l'une des revendications 1-6 avec

B un composant isocyanate
en présence de
C d'agent gonflant contenant un ou plusieurs composés choisis dans le groupe constitué par les agents gonflants chimiques exempts d'halogène, les agents gonflants physiques exempts d'halogène et les oléfines (hydro) fluorées.

9. Procédé selon la revendication 8, le mélange réactionnel présentant un indice d'isocyanate ≥ 180, de préférence ≥ 270, en particulier de 290-440.

10. Production de mousses dures de PUR/PIR comprenant un procédé selon l'une des revendications 8 ou **9.**

11. Mousse dure de PUR/PIR pouvant être obtenue par un procédé selon la revendication 8, 9 ou 10, présentant en particulier une masse volumique brute ≤ 45 kg/m$^3$.

12. Utilisation d'une mousse dure de PUR/PIR selon la revendication 11 comme mousse d'isolation et/ou comme promoteur d'adhérence dans des éléments composites, les éléments composites comprenant une couche comprenant la mousse dure de PUR/PIR et au moins une couche de recouvrement.

13. Éléments composites qui un noyau en une mousse dure de PUR/PIR, préparée à l'aide d'un procédé de transformation d'un mélange réactionnel constitué par un composant réactif vis-à-vis d'isocyanate A avec

B un composant isocyanate
en présence de
C d'agent gonflant contenant un ou plusieurs composés choisis dans le groupe constitué par les agents gonflants chimiques exempts d'halogène, les agents gonflants physiques exempts d'halogène et les oléfines (hydro) fluorées,
**caractérisés en ce que**
le composant réactif vis-à-vis d'isocyanate A) contient les composants suivants :

A1) une formulation de polyol, comprenant

50-80% en poids d'un composant polyol a1) constitué par un ou plusieurs polyols choisis parmi les polyesterpolyols, les polycarbonatepolyols ou les polyétheresterpolyols présentant un indice d'hydroxyle de 100-300 mg de KOH/g et une fonctionnalité moyenne de 1,5-2,5, le composant polyol a1) comprenant au moins un polyesterpolyol ou polyétheresterpolyol aromatique ou aromatique/aliphatique,
0-5% en poids d'un composant polyol a2) constitué par un ou plusieurs polyols choisis parmi les polyesterpolyols et les polyétheresterpolyols présentant un indice d'hydroxyle de 320-450 mg de KOH/g et une fonctionnalité moyenne de 3-4,5, le composant polyol a2) comprenant au moins un polyesterpolyol ou polyétheresterpolyol aromatique ou aromatique/aliphatique,
7,0-15,0 % en poids d'un composant polyol a3) constitué par un ou plusieurs polyols choisis parmi les polyétherpolyols présentant un indice d'OH de 10-80 mg de KOH/g et présentant une fonctionnalité moyenne de ≥ 2,0 à ≤ 3,0, préparés par alcoxylation d'un composant de départ approprié avec un mélange d'oxyde d'éthylène (OE) et d'oxyde de propylène (OP) présentant une teneur en OE de 15-70% en poids, par rapport à la quantité totale d'OE et d'OP,
0,0-7,5% en poids d'un composant polyol a4) constitué par un ou plusieurs polyols choisis parmi les polyétherpolyols présentant un indice d'OH dans la plage de 350-500 mg de KOH/g, préparés par alcoxylation d'une amine aromatique avec au moins un oxyde d'alkylène, 0,0-3,0% en poids d'un composant polyol a5) constitué par un ou plusieurs polyols choisis parmi les polyesterpolyols présentant un indice d'OH dans la plage de 600-900 mg de KOH/g, en particulier de 750-850 mg de KOH/g ;

A2) 0-5% en poids de composés de bas poids moléculaire réactifs vis-à-vis d'isocyanate,
ainsi que
A3) le cas échéant des catalyseurs,
A4) le cas échéant des adjuvants et des additifs,
A5) 0-1,5% en poids d'eau et
A6) 0-7,5 % en poids (en particulier de préférence 0-5% en poids) d'huile de ricin,

toutes les indications de pourcentage en poids se rapportant à chaque fois au poids total de A.

**14.** Éléments composites selon la revendication 13, qui contiennent un noyau en mousse dure de PUR/PIR et une ou deux couches de recouvrement.

**15.** Éléments composites selon la revendication 14, au moins l'une des deux couches de recouvrement étant en métal.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018206624 A
- WO 2013080988 A1
- WO 2018206624 A1
- WO 2013010988 A1